Europäisches Patentamt

European Patent Office

Office européen des brevets

(11) Publication number: **0 096 665**
A1

## (12) EUROPEAN PATENT APPLICATION

(21) Application number: 83850130.2

(51) Int. Cl.³: **F 16 D 1/06**

(22) Date of filing: 17.05.83

(30) Priority: 04.06.82 SE 8203466

(43) Date of publication of application:
21.12.83 Bulletin 83/51

(84) Designated Contracting States:
BE DE FR GB IT SE

(71) Applicant: Atlas Copco Aktiebolag

Nacka(SE)

(72) Inventor: Berle, Axel Gunnar
Kievermont 173
B-2440 Geel(BE)

(74) Representative: Grundfelt, Gunnar et al,
c/o Atlas Copco Aktiebolag Patent Department
S-105 23 Stockholm(SE)

(54) Shaft end sleeve assembly.

(57) A shaft end sleeve assembly having a spring element (3) between the nut (2) and the sleeve (1). Preferably, the spring element (3) is a frusto-conical disc (12) and may be integral with the sleeve.

Fig. 1

EP 0 096 665 A1

## Shaft end sleeve assembly

The present invention relates to a shaft end sleeve assembly.

In different types of rotary machines it is common to provide the rotor shaft ends with wear sleeves against which journal bearings or seals work. When these sleeves are worn down they are simply replaced by new ones.

According to prior art solutions the sleeves are pressed against stops by means of nuts. This mounting method often creates problems when the machine is taken into operation. During operation the shaft end is bent which makes the sleeve move slightly so that the pressing force is considerably reduced. When this happens small movements between the sleeve and the shaft end cause fretting of the shaft end. If, in order to avoid this problem, the initial pressing force is increased there is a clear risk of overstressing the sleeve.

The present invention, which is defined by the appended claims, makes it possible to obtain a tight mounting of the sleeve with no risk of fretting and without overstressing of the sleeve. These advantages are obtained by using a spring element between the nut and the sleeve. A particular advantage is obtained if the spring element is made with a substantially frusto-conical disc. In this way the spring force will be almost constant independent of movement of the spring ends relative to each other.

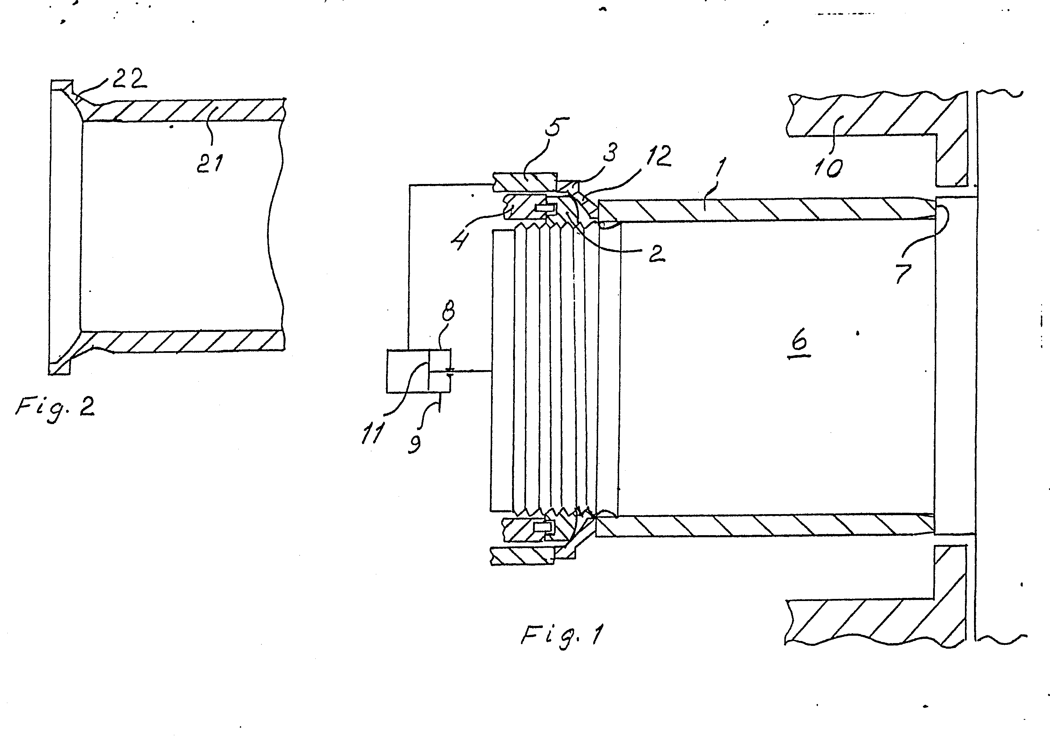

The invention is described more in detail below with reference to the accompanying drawings in which fig 1 shows a sleeve mounted on a shaft end. Fig 2 shows a modified sleeve.

The shaft end sleeve assembly shown in fig 1 comprises a rotor shaft end 6 on which bearings, not shown, are mounted for supporting the rotor in a machine housing 10. Shaft end 6 is provided with a sleeve 1 which is pressed against a stop 7 on the shaft by a nut 2 via a spring element 3. The spring element is provided with a substantially frusto-conical disc 12. With a spring element made in this way the spring force acting on sleeve 1 becomes almost constant independent of the deformation of the spring element. Thus, the force applied against the sleeve will not decrease to any noticeable degree because of small movements between shaft end and sleeve occuring when the machine is taken into operation after the sleeve has been mounted. The sleeve remains tightly secured on the shaft end with a force defined by the spring element so that no fretting is obtained and no overstressing of the sleeve.

The sleeve is mounted by means of a tool 4, 5. A hydraulic cylinder 8, which by means of a part 5 pushes on spring element 3, has its piston 11 connected with shaft end 6. When hydraulic fluid is supplied through conduit 9 sleeve 1 will be pressed against stop 7 through spring element 3. Nut 2 is now turned by wrench 4 until the nut abuts spring element 3. The hydraulic pressure is then released and the tool taken away.

Fig 2 shows a modified sleeve 21 with a substantially frusto-conical disc 22 being an integral part of the sleeve.

Claims:

1.     A shaft end sleeve assembly comprising a shaft end (6), a sleeve (1) positioned around the shaft end and axially pressed against a stop (7) by a nut (2), c h a r a c t e r i z e d   b y  a spring element (3) being positioned between said nut (2) and said sleeve.

2.     An assembly according to claim 1, c h a r a c t e r i z e d i n  that said spring element (3) comprises a substantially frusto-conical disc (12).

3.     An assembly according to claim 2, c h a r a c t e r i z e d i n  that said substantially frusto-conical disc (22) forms part of said sleeve (21).

Fig. 2

Fig. 1

1/1

0096665

# EUROPEAN SEARCH REPORT

**European Patent Office**

**0096665**
Application number

EP  83 85 0130

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 603 655 (KELLER)<br>* Whole document * | 1-3 | B 62 D  27/06 |
| X | GB-A- 417 398 (ATELIERS DE CONSTRUCTION)<br>* Whole document * | 1,2 | |
| Y | | 3 | |
| Y | DE-A-1 400 411 (SPIETH)<br>* Whole document * | 3 | |
| X | GB-A- 834 075 (TARBUK)<br>* Whole document * | 1,2 | |
| X | US-A-3 746 413 (NISHIKAWA)<br>* Columns 1,2; figure 1 * | 1 | **TECHNICAL FIELDS SEARCHED (Int. Cl. ³)** |
| X | US-A-2 605 121 (ENSINGER)<br>* Whole document * | 1 | B 61 D   3/08<br>B 62 D  27/06<br>F 16 B   7/20 |

The present search report has been drawn up for all claims

| Place of search | Date of completion of the search | Examiner |
|---|---|---|
| THE HAGUE | 05-09-1983 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82